# EUROPÄISCHE PATENTANMELDUNG

(11) **EP 1 127 901 A1**
(43) Veröffentlichungstag der Anmeldung: **29.08.2001**
(21) Anmeldenummer: 01103213.3
(22) Anmeldetag: 12.02.2001
(51) Int. Cl.: C08F 210/02, C08F 8/12

(54) **Verfahren zur Herstellung von emulgierbaren Ethylenpolymerisaten**

(30) Priorität: 25.02.2000 DE 10008931
(71) Anmelder: BASF AKTIENGESELLSCHAFT, 67056 Ludwigshafen (DE)
(72) Erfinder: Wittkowski, Lars, Dr., 68167 Mannheim (DE); Deckers, Andreas, Dr., 55234 Flomborn (DE); Weber, Wilhelm, Dr., 67435 Neustadt (DE); Weiss, Stefan, Dr., 69151 Neckargemünd (DE); Ehle, Michael, Dr., 67071 Ludwigshafen (DE); Gast, Siegfried, 67071 Ludwigshafen (DE)

(57) **Zusammenfassung**

Emulgierbare Ethylenpolymerisate, enthaltend Copolymerisate von
90 bis 95 Gew.-% Ethylen,
4 bis 10 Gew.-% einer oder mehrerer C₃-C₁₂-Alkencarbonsäuren, bevorzugt Acrylsäure, und
0 bis 1,2 Gew.-% eines oder mehrerer tertiärer Ester der entsprechenden C₃-C₁₂-Alkencarbonsäuren,
wobei die Copolymerisate eine kinematische Schmelzviskosität von 800 bis 3000 cSt aufweisen, gemessen bei 120°C;
weiterhin ein Verfahren zur Herstellung der erfindungsgemäßen emulgierbaren Ethylenpolymerisate, Emulsionen, enthaltend die erfindungsgemäßen Ethylenpolymerisate, ein Verfahren zur Herstellung der Emulsionen aus den erfindungsgemäßen Ethylenpolymerisaten sowie Bodenpflegemittel, Autopflegemittel, Lederpflegemittel, Steinpflegemittel sowie Beschichtungen von Oberflächen aus Holz, Metall, Papier, Glas oder Kunststoffen, enthaltend wässrige Emulsionen der erfindungsgemäßen emulgierbaren Wachse.

## Beschreibung

Die vorliegende Erfindung betrifft emulgierbare Wachse, enthaltend Copolymerisate von
90 bis 95 Gew.-% Ethylen,
4 bis 10 Gew.-% einer oder mehrerer C₃-C₁₂-Alkencarbonsäuren und
0 bis 1,2 Gew.-% eines oder mehrerer tertiärer Ester der entsprechenden C₃-C₁₂-Alkencarbonsäuren,
wobei die Wachse eine kinematische Schmelzviskosität von 800 bis 3000 mm²/s aufweisen, gemessen bei 120°C.

Weiterhin betrifft die Erfindung ein Verfahren zur Herstellung der erfindungsgemäßen emulgierbaren Ethylenpolymerisate, Emulsionen, enthaltend die erfindungsgemäßen Ethylenpolymerisate, ein Verfahren zur Herstellung der Emulsionen aus den erfindungsgemäßen Ethylenpolymerisaten sowie Bodenpflegemittel, Autopflegemittel, Lederpflegemittel, Steinpflegemittel sowie Beschichtungen von Oberflächen aus Holz, Metall, Papier, Glas oder Kunststoffen, enthaltend wässrige Emulsionen der erfindungsgemäßen emulgierbaren Wachse.

Emulgierbare Ethylenpolymerisate sind technisch von großem Interesse, weil sie sich beispielsweise als preisgünstige Bodenpflegemittel oder Prozesshilfsmittel einsetzen lassen. Weitere Verwendungsmöglichkeiten sind Schmelzkleber für Metalle, Keramik, Holz, Glas, Leder oder Kunststoffe, weiterhin Haftvermittler für Beschichtungen aus Polyolefinen oder Kautschuken oder Zusätze zu Anstrichmitteln. Bei den technisch bekannten emulgierbaren Ethylenpolymerisaten handelt es sich um sauerstoffhaltige Ethylenpolymerisate, bei denen der Sauerstoff auf zwei verschiedene Arten eingeführt werden kann:
- durch radikalische oder Ziegler-Natta-Polymerisation von Ethylen, gefolgt von der Oxidation der erhaltenen Polyethylenwachse durch Luft oder Peroxide oder reinem Sauerstoff oder Gemischen derselben lassen sich sogenannte Oxidat-Wachse erhalten, oder
- durch radikalische Copolymerisation von Ethylen mit Acrylsäure oder Methacrylsäure oder hydrolysierbaren Acrylaten oder Methacrylaten, Malonaten, Vinylcarboxylaten wie beispielsweise Vinylacetat unter Hochdruck-Bedingungen lassen sich ebenfalls Sauerstofffunktionalitäten in die Polyethylenkette einführen.

Beide Verfahren weisen jedoch technische Nachteile auf. Durch die Oxidation eines Polyethylens wird das Molekulargewicht der zugrundeliegenden Polyethylenketten verringert, was nachteilig für die Härte des Produktes ist. Schließlich ist das Herstellen von Oxidat-Wachsen stets ein Zweistufen-Prozess, was zu zusätzlichem Investitionsbedarf führt (vgl. beispielsweise: *Ullmann's Enyclopädie der technischen Chemie*, 4. Auflage, Stichworte: Wachse, Bd. 24, S. 36 ff., Thieme Verlag Stuttgart, **1977**).

Die direkte Copolymerisation von Ethylen mit Acrylsäure ist zwar möglich. Auf den unmittelbaren Einsatz von Acrylsäure als Comonomer möchte man jedoch in technischen Anlagen verzichten, weil Acrylsäure in mechanisch beanspruchten Anlagenteilen wie beispielsweise Kompressoren, Zuleitungsrohren und Ventilen korrosiv wirkt.

Wenn für die Herstellung des Polyethylenwachses der Polymerisation ein Verfahrensschritt zur Esterhydrolyse nachgeschaltet werden muss, so handelt es sich um ein Zweistufenverfahren mit den damit verbundenen Nachteilen des höheren Investitionsbedarfs.

DE-A 25 24 274 beschreibt ein Verfahren zur Herstellung von Polymeren aus Ethylen und tert-Butylacrylat oder tert-Butylmethacrylat, wobei in einem Reaktor polymerisiert wird und in einer zweiten Zone das erhaltene Ethylen/Acrylsäure-tert.-butylester/Acrylsäure-Terpolymere thermisch nachbehandelt wird. Durch die thermische Nachbehandlung werden gewisse Prozentsätze der Estergruppen abgespalten. Die literaturbekannten Polymere besitzen sehr gute Filmeigenschaften und liefern ein gutes Folienmaterial. Als Wachse sind die hergestellten Terpolymere jedoch ungeeignet.

Es ist auch bekannt, dass sich tert.-Alkylester der Acrylsäure oder Methacrylsäure mit Ethylen radikalisch copolymerisieren lassen. Diese Ester lassen sich nicht nur unter sauren oder alkalischen Bedingungen hydrolysieren, sondern auch thermisch abspalten.

US 3,132,120 beschreibt die Herstellung von Ethylen/Methacrylsäure-tert.-butylester-Copolymeren und anschließender Thermolyse bei Temperaturen von 275 bis 350°C in Abwesenheit substanzieller Mengen Sauerstoff. Es handelt sich hierbei um ein Zweistufenverfahren, für das hohe Investitionen nötig sind.

DE-A 43 34 846 beschreibt ein Verfahren zur Herstellung von carboxylgruppen-haltigen Copolymerisaten des Ethylens, das sich durch eine anschließende thermolytische Abspaltung der Estergruppen tertiärer Alkohole bei 150 bis 250°C in Anwesenheit von Sulfonsäuren auszeichnet. Gekennzeichnet ist das Verfahren durch eine weitgehende Abwesenheit von Initiatoren für Radikalreaktionen. Auch hierbei handelt es sich um ein Zweistufenverfahren.

DE-A 42 19 129 beschreibt eine Vorgehensweise zur Copolymerisation von Ethylen mit Acrylsäure-n-butylester oder Acrylsäuretert.-butylester in einem Rohrreaktor, der bei verschiedenen Temperaturen in den unterschiedlichen Reaktionszonen betrieben wird. Durch diese Vorgehensweise lassen sich Mischpolymerisate mit guten Folieneigenschaften erhalten, aber keine emulgierbaren Wachse.

DE-A 29 37 239 beschreibt ein Verfahren zur Herstellung von Mischpolymerisaten des Ethylens durch Copolymerisation von Ethylen mit Estern ungesättigter Carbonsäuren, die in einem zweiten Verfahrensschritt mit für die Esterhydrolyse üblichen Verbindungen bei Temperaturen von 40 bis 75°C umgesetzt werden, insbesondere mit konzentrierter H₂SO₄. Dieser zweite Verfahrensschritt ist zeitraubend und benötigt hohe Investitionen. Außerdem fallen verunreinigte Lösemittel an, die kostenintensiv gereinigt oder entsorgt werden müssen.

Schließlich wird in DE-A 17 70 777 ein Verfahren zur Herstellung von wachsartigen Mischpolymerisaten des Ethylens beschrieben, bei dem man unter Drücken von 100 bis 4000 atm und Temperaturen von 110 bis 350°C Ethylen, C₃-C₁₂-Alkencarbonsäuren, tert.-Alkylester der betreffenden C₃-C₁₂-Alkencarbonsäuren sowie Isobuten radikalisch copolymerisiert. Als bevorzugte Ausführungsformen werden eine Polymerisation in einem Rohrreaktor genannt; die Temperaturprofile werden genau beschrieben. Die nach dieser Lehre erhältlichen wachsartigen Mischpolymerisate genügen jedoch heutigen Marktanforderungen nicht mehr. So enthalten sie je nach Ausführungsform zu hohe Anteile, d.h. mehr als 1 Gew.-% an nichtabgespaltenen Estergruppen, wodurch die Wachse klebrig werden. In einer anderen Ausführungsform der DE-A 17 70 777 werden zu geringe Anteile Acrylsäure einpolymerisiert, wodurch die Emulgierbarkeit zu wünschen übrig lässt. Schließlich gibt es Ausführungsformen, in denen die Viskosität, exemplarisch bestimmt durch die kinematische Viskosität, zu gering wird, wodurch die anwendungstechnischen Eigenschaften nachlassen; so weisen beispielsweise Bodenpflegemittel, die unter Verwendung niederviskoser Wachse hergestellt werden, keine ausreichende Härte mehr auf. Schließlich fällt in der anwendungstechnischen Prüfung auf, dass die nach dem in DE-A 17 70 777 offengelegten Verfahren erhältlichen Mischpolymerisate chemisch uneinheitlich sind. Diese Uneinheitlichkeit, beispielsweise verursacht durch die unterschiedlichen Comonomergehalte der verschiedenen Polymermoleküle, macht sich durch eine höhere Stippenzahl bemerkbar.

Die nach DE-A 17 70 777 erhältlichen Wachse ließen sich durch ein längeres Erhitzen nachbehandeln, aber dadurch droht ein Abbau der Polymerketten sowie Vernetzungen des Polymers. Vernetzte Polymere ihrerseits fallen in anwendungstechnischen Prüfungen durch eine hohe Anzahl von Stippen nachteilig auf. Weiterhin wäre es möglich, eine chemische Einheitlichkeit dadurch zu gewährleisten, dass beispielsweise die Zugabe von Acrylsäure-tert.-butylester an ein sehr hohen Zahl von Stellen in den Rohrreaktor einzuspeisen. Diese Vorgehensweise ist aber wegen der hohen Drücke technisch und wirtschaftlich unvorteilhaft. Entweder benötigt man zahlreiche sehr leistungsfähige Pumpen, oder man müsste einen starken Druckverlust in Kauf nehmen.

Es bestand also die Aufgabe,
- emulgierbare Wachse, enthaltend Ethylen/Acrylsäure-tert.-butylester/Acrylsäure-Copolymere bereitzustellen, die möglichst stippenarm sind, eine ausreichende Viskosität aufweisen, die nicht klebrig sind und sich unter wirtschaftlichen Bedingungen herstellen lassen;
- ein Verfahren zur Herstellung der aufgabengemäßen Wachse bereitzustellen;
- wässrige Emulsionen aus den aufgabengemäßen Wachsen herzustellen, und
- aus den Emulsionen der emulgierbaren Wachse Bodenpflegemittel, Autopflegemittel, Lederpflegemittel, Steinpflegemittel sowie Beschichtungen von Oberflächen aus Holz, Metall, Papier, Glas oder Kunststoffen herzustellen.

Es wurde nun gefunden, dass sich die erfindungsgemäßen emulgierbaren Wachse dadurch erhalten lassen, dass man Ethylen und einen oder mehrere tertiäre Ester einer oder mehrerer C₃-C₁₂-Alkencarbonsäuren, bevorzugt ist Acrylsäure-tert.-butylester, in einem gerührten Hochdruckautoklaven bei erhöhter Temperatur polymerisiert, noch im selben Schritt die Estergruppen thermisch abspaltet und dabei bei weitgehend konstanter Temperatur arbeitet. Dabei ist die Temperatur über den gesamten Reaktor während der Reaktion gleich. Weder zeitlich noch örtliche Temperaturdifferenzen treten in nennenswertem Maße auf, sie betragen im Mittel weniger als 5°C, bevorzugt weniger als 3°C. Auf die Einstellung eines Temperaturprofils wie in DE-A 42 19 129 wird also verzichtet.

Weiterhin ist von Bedeutung, dass man sofort bei erhöhter Temperatur arbeitet. Unter erhöhter Temperatur werden Temperaturen von 240 bis 340°C verstanden, bevorzugt von 260 bis 300°C. Höhere Temperaturen können zu partieller Zersetzung von Monomeren sowie zur Vernetzung des Produktes führen, was in anwendungstechnischen Prüfungen zu Stippenbildung führt. Bei niedrigeren Temperaturen findet die Abspaltung der tert.-Butylgruppen nicht in ausreichendem Maße statt.

Die Druckbedingungen sind weniger kritisch; geeignete Drucke sind 1000 bis 3500 bar, bevorzugt 1500 bis 2500 bar. Diese Drucke sind Standardbedingungen der Hochdruck-Polymerisationsverfahren.

Die für dieses Verfahren bevorzugt angewandten gerührten Hochdruckautoklaven sind an sich bekannt, eine Beschreibung findet man in *Ullmann's Enyclopädie der technischen Chemie,* 4. Auflage, Stichworte: Wachse, Bd. 24, S. 36 ff., Thieme Verlag Stuttgart, **1977**). Bei ihnen verhält sich überwiegend das Verhältnis Länge/ Durchmesser in Intervallen von 5:1 bis 30:1, bevorzugt 10:1 bis 20:1.

Als Monomere werden Ethylen sowie ein oder mehrere tertiäre Ester einer oder mehrerer C₃-C₁₂-Alkencarbonsäuren eingesetzt. Weitere unter den Reaktionsbedingungen copolymerisierbare Monomere können optional zugesetzt werden. Hierbei kommen 1-Olefine wie beispielsweise Propen oder 1-Buten in Frage, weiterhin Isobuten.

Als C₃-C₁₂-Alkencarbonsäuren sind beispielsweise geeignet: Acrylsäure, Methacrylsäure, Vinylessigsäure, Crotonsäure, Maleinsäure und Fumarsäure, wobei Acrylsäure und Methacrylsäure bevorzugt sind, besonders bevorzugt ist Acrylsäure.

Als tertiäre Estergruppen sind beispielsweise geeignet: tert.-Butyl oder tert.-Amyl oder Neophyl, wobei tert.-Butyl besonders bevorzugt ist.

Die Zusammensetzung des Comonomer-Feeds lässt sich in gewissen Grenzen variieren. Sie beträgt im Allgemeinen 1,5 bis 8 Gew.-% eines tertiären Esters einer C₃-C₁₂-Alkencarbonsäure oder auch des Gemischs der entsprechenden Ester; bevorzugt sind 2 bis 7 Gew.-% und besonders bevorzugt sind 2,5 bis 6,7 Gew.-%. Der Rest zu 100 Gew.-% wird als Ethylen angegeben.

Die Polymerisate können weiterhin geringe Mengen in der Größenordnung von 2 Gew.-% Isobuten enthalten. Das Isobuten wird durch thermolytische Abspaltung von tertiären Butylgruppen gebildet. Die analytische Bestimmung ist jedoch schwierig, weil sowohl in den gängigen NMR-Messungen als auch in den IR-Messungen die entsprechenden Signale stark überlagert werden. Deshalb werden die einpolymerisierten Isobuten-Einheiten in der Analytik üblicherweise vernachlässigt.

Die Werte für die Zusammensetzung des Comonomer-Feeds sind insbesondere dann sinnvoll, wenn ein Gesamtumsatz von rund 30 bis 35% eingestellt wird. Wenn ein geringerer Umsatz verwirklicht wird, müssen im Allgemeinen geringere Prozentsätze an tertiärem Ester dosiert werden.

Als Starter für die radikalische Polymerisation können die üblichen Radikalstarter wie beispielsweise organische Peroxide, Sauerstoff oder Azoverbindungen eingesetzt werden. Auch Kombinationen der oben genannten Radikalstarter sind geeignet. Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Die Radikalstarter werden in für Polymerisationen üblichen Mengen dosiert.

Der Reaktionsmasse können die in der Hochdruckpolymerisation üblichen Regler zugegeben werden, beispielsweise Alkane wie Propan oder Isododekan, Alkene wie beispielsweise Propylen, Aldehyde wie beispielsweise Propionaldehyd oder Benzaldehyd oder Ketone wie beispielsweise Aceton oder Methylisobutylketon.

Durch das oben beschriebene Verfahren lassen sich die erfindungsgemäßen Wachse erhalten. Diese erfindungsgemäßen Wachse sind wie folgt charakterisiert:
- Die Schmelzpunkte der erfindungsgemäßen Wachse liegen im Bereich von 60 bis 110°C, bevorzugt von 80 bis 105°C. Wachse mit niedrigeren Schmelzpunkten sind nachteilig bei der Verwendung in Bodenpflegemitteln oder Autopflegemitteln, weil sie bei höheren Temperaturen, beispielsweise im Sommer, keine genügende mechanische Stabilität mehr aufweisen. Wachse mit höheren Schmelzpunkten lassen sich deutlich schlechter emulgieren.
- Die Säurezahl, bestimmt nach DIN 53402, liegt im Bereich von 30 bis 110 mg KOH/g Wachs, bevorzugt von 30 bis 65 mg KOH/g Wachs und besonders bevorzugt 30 bis 50 mg KOH/g Wachs.
- Der Anteil an nicht thermolysierten tertiären Estergruppen sollte möglichst gering sein. Bevorzugte Untergrenze ist 0,3 Gew.-% und besonders bevorzugt ist 0,02 Gew.-%; eine vollständige Abspaltung aller Estergruppen erfordert eine verlängerte Reaktionszeit und ist deshalb wirtschaftlich weniger attraktiv. Außerdem kann eine verlängerte Reaktionszeit zu einer erhöhten thermischen Belastung des herzustellenden Wachses führen und zu Abbau der Polymerketten oder zu Vernetzungsreaktionen Anlass geben.
- Der maximale Anteil an nicht thermolysierten Estergruppen beträgt 1,2 Gew.-%, bevorzugt 1 Gew.-% und besonders bevorzugt 0,5 Gew.-%, höhere Anteile führen zu klebrigen Wachsproben. Die bevorzugte Methode zur Bestimmung der Estergruppen ist die NMR-Spektroskopie.
- Der Anteil an Säureeinheiten in den erfindungsgemäßen Wachsen, besonders bevorzugt an Acrylsäureeinheiten beträgt mindestens 1,2 Gew.-%, bevorzugt mindestens 2 Gew.-% und besonders bevorzugt mindestens 4 Gew.-%. Geringere Anteile an Säureeinheiten führen zu einer schlechteren Emulgierbarkeit der Wachse. Weiterhin weisen Bodenpflegemittel, hergestellt unter Verwendung eines erfindungsgemäßen Wachses erst mit mehr als 1,2 Gew.-% Säureeinheiten eine gute Rutschfestigkeit auf.
- Andererseits sollte der Anteil an Säuregruppen 10 Gew.-%, bevorzugt 8,5 Gew.-% und besonders bevorzugt 8 Gew.-% nicht übersteigen, weil die Esterkomponente, aus der die Säuregruppen entstanden sind, im Preis deutlich höher liegt als Ethylen.
- Die kinematische Schmelzviskosität, gemessen bei 120°C, der erfindungsgemäßen Wachse liegt im Bereich von 800 bis 3000 mm²/s, bevorzugt im Bereich von 1000 bis 2000 mm²/s. Geringere Schmelzviskositäten führen zu mechanisch unbefriedigenden Eigenschaften der gepflegten Böden; liegen die Schmelzviskositäten zu hoch, lassen sich die Wachse nicht mehr befriedigend emulgieren.

Die erfindungsgemäßen Wachse lassen sich nach an sich bekannten Verfahren emulgieren. Dazu schmilzt man das Wachs in einem Autoklaven auf und stellt die beispielsweise folgende Mischung her:
- 10 bis 80 Gewichtsteile des erfindungsgemäßen Polymerisats
- 2 bis 10 Gewichtsteile eines Emulgators, wofür sich ionische und nicht-ionische Tenside eignen; nicht-ionische Tenside sind bevorzugt. Gebräuchliche nicht-ionische Emulgatoren sind z.B. ethoxylierte Mono-, Di- und Tri-Alkylphenole (EO-Grad: 3 bis 50, Alkylrest: C₄-C₁₂) sowie ethoxylierte Fettalkohole (EO-Grad: 3 bis 80; Alkylrest: C₈-C₃₆). Bevorzugte Beispiele hierfür sind die Lutensol® -Marken der BASF AG, aber auch andere Marken wie beispielsweise die Triton® -Marken der Union Carbide sind geeignet.
- 0,1 bis 5, bevorzugt 0,5 bis 1 Gewichtsteile eines Alkalimetallhydroxids, wobei NaOH und KOH bevorzugt sind;
- 0,01 bis 1 Gewichtsteile eines Sauerstofffängers, besonders geeignet ist Natriumdisulfit,
- sowie 20 bis 200 Gewichtsteile Wasser, bevorzugt sind 60 bis 70 Gewichtsteile.

Temperatur und Druckbedingungen für die Herstellung der erfindungsgemäßen Emulsionen sind an sich unkritisch. Man kann in weiten Temperaturbereichen arbeiten, bevorzugt oberhalb des Schmelzpunkts des zu emulgierenden erfindungsgemäßen Wachses. Als Druckbereich sind 1 bis 10 bar geeignet. Die Mischdauer nach vollständigem Aufschmelzen des Wachses beträgt üblicherweise 2 Minuten bis eine Stunde. Man arbeitet in der Regel inert, d.h. unter Stickstoffatmosphäre, und unter Rühren.

Die erfindungsgemäß hergestellte Emulsionen können in den folgenden, exemplarisch genannten Anwendungen zum Einsatz kommen: Schmelzkleber, Verarbeitung von Thermoplasten (z.B. Polyamid, schlagfestem Polystyrol, ABS oder Polypropylen), (wässrige) Lacke, Zweischicht-Metallic-Autolacke, Masterbatche (Pigmentkonzentrate zur Anfärbung von beispielsweise Polyolefinen), Beschichtung von Metall-, Holzoberflächen, Papier, Glas oder Kunststoffen, Klebstoffe, Baustoffimprägnierung, Unterbodenschutz, Pflegemittel (z.B. Leder, Steinpflege), Autopflegemittel, Bodenpflegemittel, Flaschenbeschichtungen und Formtrennmittel.

Besonders bevorzugt ist die Verwendung der erfindungsgemäßen Emulsionen in Mitteln zur Bodenpflege, in Autopflegemitteln, Lederpflegemitteln und Steinpflegemitteln sowie in Beschichtungen von Oberflächen aus Holz, Metall, Papier, Glas oder Kunststoffen.

Die Fähigkeit der erfindungsgemäßen Emulsionen zur Bildung farbloser, klarer, glänzender Filme lässt sich in Bodenpflegemitteln nutzen. Durch sie lässt sich weiterhin die Rutschfestigkeit und die Begehbarkeit von Böden verbessern.

Ein typisches Test-Bodenpflegemittel besteht aus
- 10 bis 20 Gewichtsteilen der erfindungsgemäßen Emulsionen, die für Elastizität, schmutzabweisendes Verhalten und Glanz des zu pflegenden Bodens verantwortlich sind,
- 0,5 bis 5, bevorzugt 2 bis 3 Gewichtsteilen Ethylendiglykol,
- 0,1 bis 10, bevorzugt 1 bis 2 Gewichtsteilen Ethylenglykol,
- 0,1 bis 10, bevorzugt 1 bis 2 Gewichtsteilen eines permanenten Weichmachers, wobei als Weichmacher beispielsweise Phosphorsäuretrialkylester verwendet werden, besonders bevorzugt ist Tri- (n-butoxyethyl)phosphat,
- 0,1 bis 5 Gewichtsteile, bevorzugt 0,5 bis 1,5 Gewichtsteilen eines Netzverlaufsmittels, wobei als Netzverlaufsmittel gewöhnlich fluorierte Tenside, beispielsweise FC-129 der Firma 3M verwendet werden,
- 20 bis 30 Gewichtsteile einer Dispersion aus Polystyrol/Acrylat als Trägermaterial. Ein bevorzugtes Beispiel ist Poligen® MF750.

Die Herstellung des Testbodenpflegemittels erfolgt durch Vermischen der Komponenten in einem Eimer, wobei ein 5-minütiges Zusammenrühren im Allgemeinen ausreichend ist.

### Arbeitsbeispiele

### 1. Herstellung der erfindungsgemäßen Polymerisate

Ethylen und Acrylsäure-tert.-butylester (Beispiel Nr. 1 bis 4) wurden unter Zusatz von 100 ml Propionaldehyd und 1500 ml Isododekan als Molekulargewichtsregler (Moderatoren) in einem Hochdruckautoklaven polymerisiert. Der hierfür eingesetzte Hochdruckautoklav ist vergleichbar mit dem in der Literatur beschriebenen Autoklaven (M. Buback et al., *Chem*. *Ing*. *Tech*. **1994**, *66*, 510). Hierzu wurde das Monomerengemisch, dem als Initiator 0,08 mol/h Di-tert.-Butylperoxid, 0,03 mol/h tert.-Butylperoxypivalat und 0,03 mol/h tert.-Butylperoxyisononanoat zugesetzt worden war, unter dem Reaktionsdruck von 1700 bar eingespeist. Die Temperatur des Reaktionsguts betrug konstant 300°C. Die Verweilzeit betrug 2 Minuten. In Tabelle 1 sind Polymerisationsbedingungen und die analytischen Daten der erhaltenen Polymerisate zusammengestellt.

Der Gehalt an Ethylen, Acrylsäure-tert.-butylester und Acrylsäure in den Polymerisaten wurde IR-spektroskopisch und NMR-spektroskopisch bestimmt. Die Säurezahl der Polymerisate wurde titrimetrisch nach DIN 53402 bestimmt.

### 2. Herstellung von Emulsionen aus den erfindungsgemäßen Polymerisaten

Die auf den erfindungsgemäßen Polymerisaten basierenden Emulsionen wurden hergestellt, indem man in einem Autoklaven bei 120°C und 1,5 bis 3 bar unter Stickstoffatmosphäre 30 Minuten lang die folgenden Komponenten zusammenrührte:

| | |
|---|---|
| 25-30 Teile | Polymerisat (Beispiel Nr. 1 bis 4 sowie V1 bis V3) |
| 5-7 Teile | Emulgator (nichtionisches Tensid, ausgewählt aus den Marken Lutensol AO10, Lutensol TO8, Lutensol ON70 und Lutensol TO107) |
| 0,5-1,0 Teile | KOH, fest |
| 0,01-0,1 Teile | Natriumdisulfit |
| 60-70 Teile | Wasser |

Es wurden stets Gewichtsteile verwendet. Es handelt sich hierbei um eine typische Rahmenformulierung, die Komponenten wurden in den angegebenen Grenzen variiert, ohne dass sich bei der anwendungstechnischen Prüfung messbare Unterschiede ergaben.

In Tabelle 2 sind die analytischen Daten der Emulsionen der nach der angegebenen Rahmenformulierung verarbeiteten Polymerisate angegeben. Die Emulsionen der erfindungsgemäßen Polymerisate sind stippenfrei.

### 3. Anwendungstechnische Prüfung der Emulsionen aus den erfindungsgemäßen Polymerisaten

Aus den Emulsionen der erfindungsgemäßen Polymerisaten wurden nach folgender typischen Rahmenformulierung Bodenpflegemittel hergestellt, indem man die Komponenten bei Zimmertemperatur in einem Eimer verrührte:

| | |
|---|---|
| 50-60 Teile | Wasser |
| 2-3 Teile | Ethylendiglykol |
| 1-2 Teile | Ethylenglykol |
| 1-2 Teile | Tri-(n-butoxyethyl)phosphat als permanenter Weichmacher |
| 0,5-1,5 Teile | einer 1%-igen Lösung FC-129 der Firma 3M als Netzverlaufmittel |
| 20-30 Teile | Polymerdispersion Poligen® MF750 |
| 10-20 Teile | Emulsion des erfindungsgemäßen Polymerisats aus Versuch 1 bis 4 bzw. eines Vergleichsbeispiels V1 bis V3. |

Es wurden wiederum stets Gewichtsteile verwendet.

Die Filmeigenschaften der nach der Rahmenformulierung hergestellten wachsreichen Abmischungen (Bodenpflegeformulierung) wurden nach zweifachem Filmauftrag auf PVC-Boden (braun, Mipolam®) gemessen. In Tabelle 2 sind Kenndaten der Bodenpflegemittel angegeben.

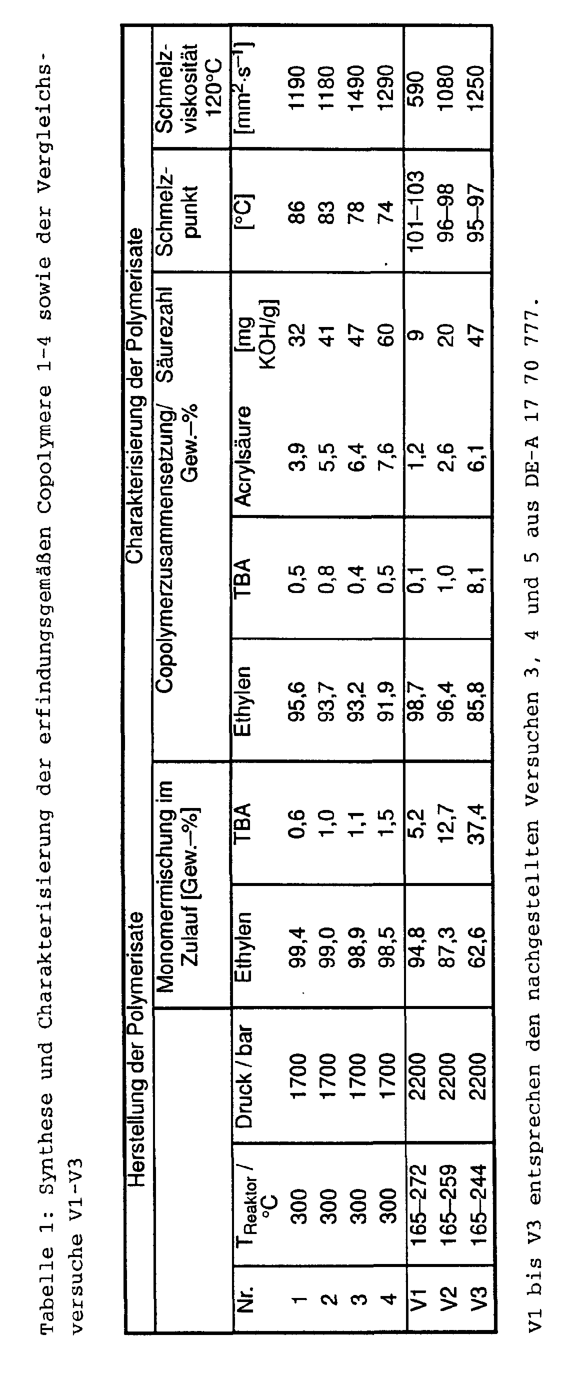

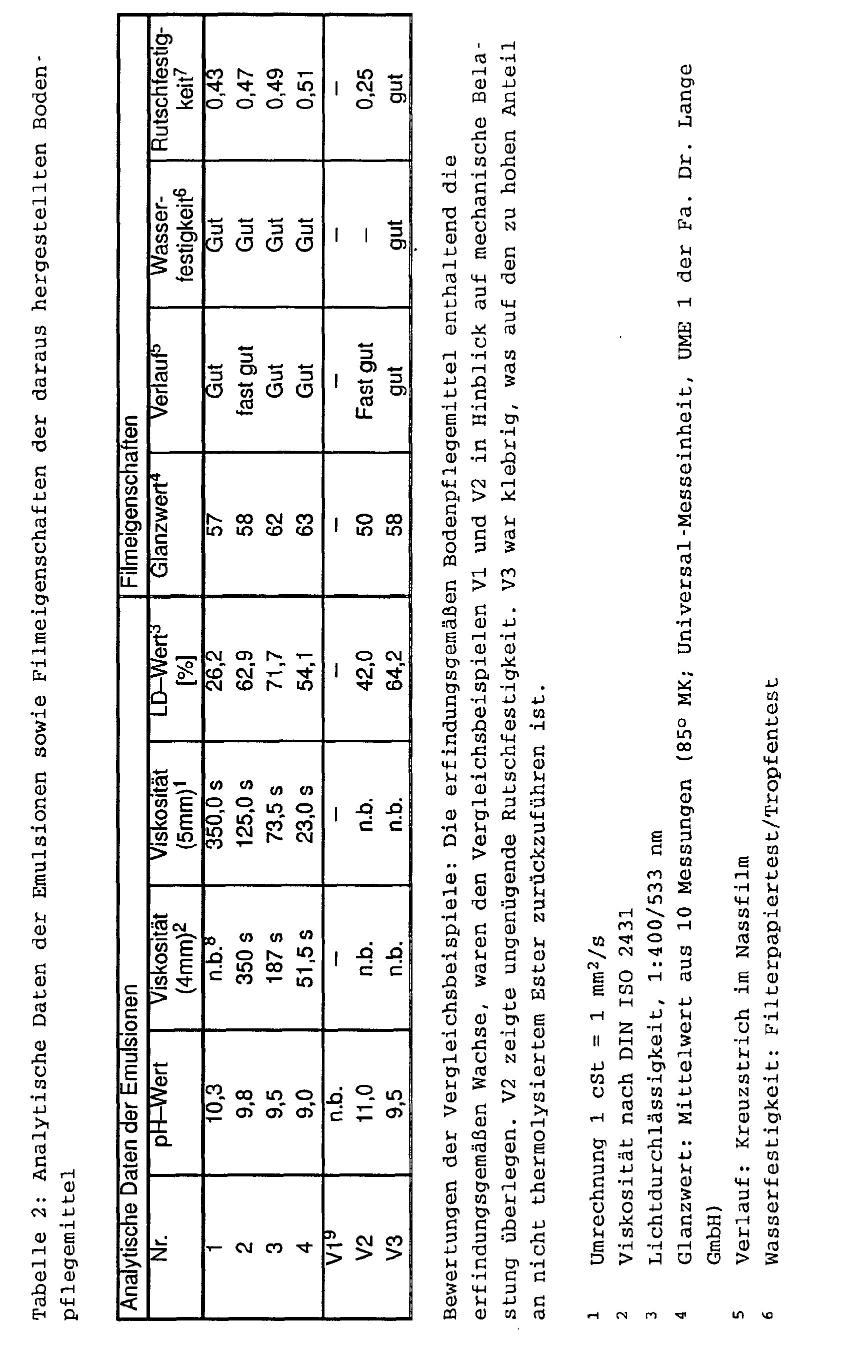

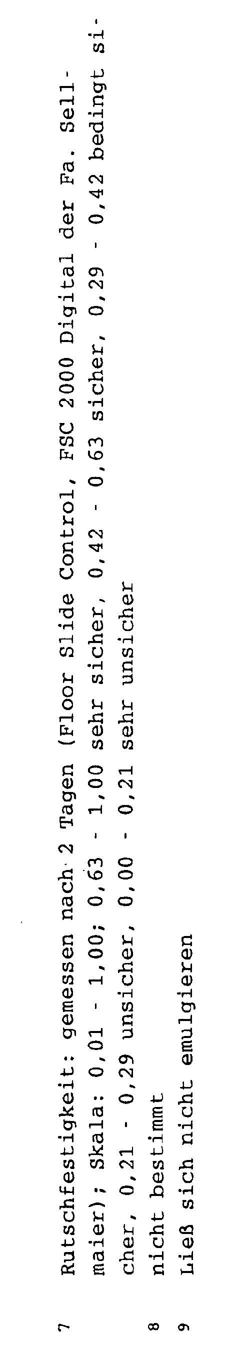

## Patentansprüche

1. Emulgierbare Wachse, enthaltend Copolymerisate von
90 bis 95 Gew.-% Ethylen,
4 bis 10 Gew.-% einer oder mehrerer C₃-C₁₂-Alkencarbonsäuren und
0 bis 1,2 Gew.-% eines oder mehrerer tertiärer Ester der entsprechenden C₃-C₁₂-Alkencarbonsäuren,
wobei die Wachse eine kinematische Schmelzviskosität von 800 bis 3000 mm²/s aufweisen, gemessen bei 120°C.

2. Emulgierbare Wachse gemäß Anspruch 1, enthaltend Copolymerisate von Ethylen mit Acrylsäure und optional Acrylsäuretert.-butylester.

3. Emulgierbare Wachse gemäß Anspruch 1, enthaltend Copolymerisate von
92 bis 95 Gew.-% Ethylen,
4 bis 8 Gew.-% Acrylsäure und
0 bis 0,5 Gew.-% Acrylsäure-tert.-butylester,
wobei die Wachse eine kinematischen Schmelzviskosität von 1000 bis 2000 mm²/s aufweisen, gemessen bei 120°C.

4. Verfahren zur Herstellung von emulgierbaren Wachsen gemäß Anspruch 1 bis 3 durch Copolymerisation von Ethylen und Acrylsäure-tert.-butylester bei Drücken von 1000 bis 3500 bar, dadurch gekennzeichnet, dass man bei einer Temperatur von 240 bis 340°C polymerisiert, die im Verlauf der Polymerisation um weniger als 5°C schwankt.

5. Verfahren gemäß Anspruch 4, dadurch gekennzeichnet, dass die Temperatur während der Polymerisation um weniger als 3°C schwankt.

6. Wässrige Emulsionen, enthaltend emulgierbare Wachse gemäß den Ansprüchen 1 bis 3.

7. Verfahren zur Herstellung von wässrigen Emulsionen, dadurch gekennzeichnet, dass man emulgierbare Wachse gemäß den Ansprüchen 1 bis 3 mit Wasser emulgiert.

8. Bodenpflegemittel, enthaltend wässrige Emulsionen gemäß Anspruch 6.

9. Autopflegemittel, Lederpflegemittel und Steinpflegemittel, enthaltend wässrige Emulsionen gemäß Anspruch 6.

10. Beschichtungen von Oberflächen aus Holz, Metall, Papier, Glas oder Kunststoffen, enthaltend wässrige Emulsionen gemäß Anspruch 6.
